# EUROPEAN PATENT SPECIFICATION

(11) **EP 1 067 669 B1**
(45) Date of publication and mention of the grant of the patent: **11.02.2004**
(21) Application number: 00105579.7
(22) Date of filing: 16.03.2000
(51) Int. Cl.: H02P 6/00, H02M 7/00

(54) **Pulse-width modulation inverter**
Wechselrichter mit Pulsweitenmodulation
Convertisseur à modulation de largueur d'impulsions

(30) Priority: 05.07.1999 JP 18982899
(43) Date of publication of application: 10.01.2001
(73) Proprietor: Kabushiki Kaisha Meidensha, Shinagawa-ku, Tokyo 141-0032 (JP)
(72) Inventor: Watanabe, Katsuyuki, Kabushiki Kaisha Meidensha, Tokyo 141-0032 (JP)
(74) Representative: Manitz, Finsterwald & Partner GbR

(56) References cited:
- PATENT ABSTRACTS OF JAPAN vol. 018, no. 188 (E-1532), 31 March 1994 (1994-03-31) -& JP 05 344740 A (TOSHIBA CORP), 24 December 1993 (1993-12-24)
- PATENT ABSTRACTS OF JAPAN vol. 017, no. 578 (E-1450), 20 October 1993 (1993-10-20) -& JP 05 168280 A (MATSUSHITA ELECTRIC IND CO LTD), 2 July 1993 (1993-07-02)
- PATENT ABSTRACTS OF JAPAN vol. 016, no. 535 (E-1288), 5 November 1992 (1992-11-05) -& JP 04 200294 A (TOSHIBA CORP), 21 July 1992 (1992-07-21)
- PATENT ABSTRACTS OF JAPAN vol. 013, no. 490 (E-841), 7 November 1989 (1989-11-07) -& JP 01 194871 A (MITSUBISHI ELECTRIC CORP), 4 August 1989 (1989-08-04)

## Description

### BACKGROUND OF THE INVENTION

The present invention relates generally to a pulse-width modulation (PWM) inverter for generating a PWM waveform by comparing a sine wave and a triangular wave for driving of an electric motor, and more particularly, to means for generating a triangular wave or a carrier, which allow an improvement in the quality of an electromagnetic sound produced by the motor.

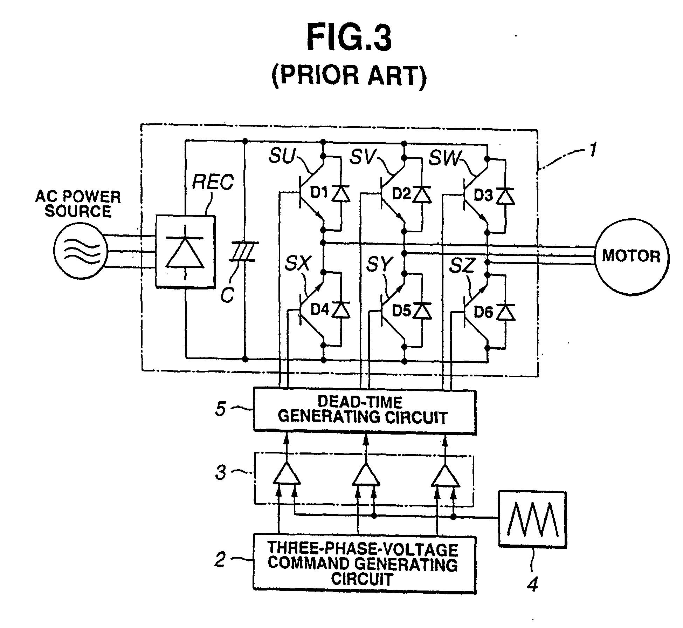

FIG. 3 shows a fundamental structure of a PWM inverter. The inverter comprises a voltage-type main circuit 1 including a direct-current (DC) power source with a rectifier REC and a smoothing capacitor C, and a bridge arm with semiconductor switches SU-SZ using power transistors and diodes D1-D6. The main circuit 1 supplies the motor with alternating-current (AC) power with the frequency and voltage controlled by ignition-phase control of the bridge arm.

A control circuit for the main circuit 1 comprises a three-phase-voltage command generating circuit 2, a comparator circuit 3, a triangular-wave generating circuit 4, and a dead-time generating circuit 5. The three-phase-voltage command generating circuit 2 receives detected signals of the motor, such as a detected-speed signal, to obtain a three-phase-voltage signal in the form of a sine wave with the phase and amplitude controlled. The comparator circuit 3 compares the amplitudes between the three-phase-voltage signal and a triangular-wave or carrier signal out of the triangular-wave generating circuit 4 to generate a PWM-waveform signal. The dead-time generating circuit 5 provides a dead time to the PWM-waveform signal, obtaining gate signals of the switches SU-SZ in the main circuit 1.

The motor driven by the inverter produces an electromagnetic sound having a triangular-wave or carrier frequency as a main component. An electromagnetic sound with single and high-pitched tone, particularly, in the frequency range of about 2 to 4 kHz is often offensive to operators.

In order to an electromagnetic sound less audible, some conventional PWM inverters have a carrier frequency maximally increased by providing a sufficient output capacity and/or by adopting high-speed switching elements.

However, such means for controlling an electromagnetic sound by increasing the carrier frequency incurs an increase not only in manufacturing cost of the inverters, but in electromagnetic interference (EMI) noises such as leakage current and radiation field.

JP 05 344740 A discloses an inverter for generating a pulse-width modulation wave form. The inverter includes a setting device for setting the carrier frequency produced by the motor in an audible audio-frequency range. This document does, however, not contain any information about the generation of the pulse-width modulation carrier frequency.

JP 01 194871 A describes a pulse-width modulation type inverter device which have sinusoidal wave form reference voltage generator, a carrier oscillator for a triangular wave, a pulse-width modulation circuit, a drive circuit of the power inverter and a load current detector. The carrier oscillator outputs the triangular waveform signal to lower the carrier frequency when the load current increases. Thus, when the load is light, the noise of the motor can be reduced, while when the load is heavy, the loss in a controllable element can be reduced.

JP 04 200294 A discloses an inverter circuit which is controlled through pulse-width modulation control based on a carrier frequency and operating frequency to drive a motor. Thereby, the carrier frequency is controlled so that the sound of the motor is not heard as a sound.

It is, therefore, an object of the present invention to provide a PWM inverter which can make an electromagnetic sound produced by an electric motor inoffensive to operators without any increase in manufacturing cost.

Another object of the present invention is to provide a PWM inverter which allows the effective use of an electromagnetic sound produced by the motor.

### SUMMARY OF THE INVENTION

An aspect of the present invention lies in providing an inverter for generating a pulse-width modulation (PWM) waveform according to claim 1.

The advantages offered by the present invention are mainly that an electromagnetic sound produced by the motor driven by the PWM inverter can be changed to that one with inoffensive tone in the audio-frequency range. Therefore, an increase in the carrier frequency is unnecessary, which incurs an increase not only in manufacturing cost of the inverters, but in EMI noises.

Moreover, the use of such electromagnetic sound as means for warning operators of operating conditions of the inverter and the motor makes specific warning devices such as a buzzer and a speaker unnecessary.

### BRIEF DESCRIPTION OF THE DRAWINGS

FIG. 1 is a circuit diagram showing a first embodiment of a PWM inverter;
FIG. 2 is a view similar to FIG.1, showing a second embodiment of a PWM inverter which is in accordance with the present invention; and
FIG. 3 is a view similar to FIG. 2, showing a fundamental structure of a PWM inverter.

### DETAILED DESCRIPTION OF THE INVENTION

Referring to the drawings, a PWM inverter will be described.

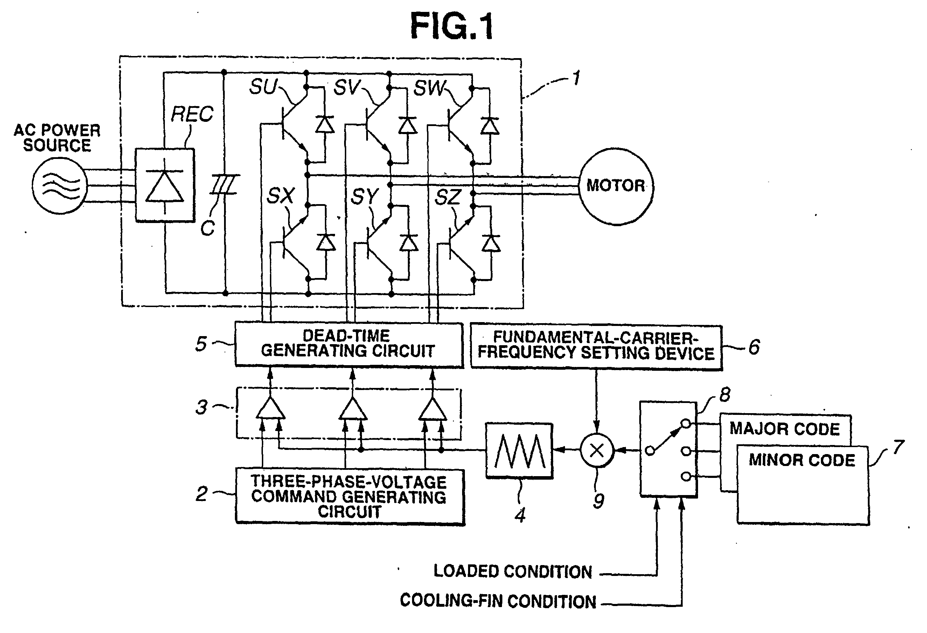

FIG. 1 shows a first embodiment of a PWM inverter, the structure of which is substantially the same as that as shown in FIG. 3 except that it includes means for switching triangular-wave or carrier frequencies derived from the triangular-wave generating circuit 4 in accordance with control conditions. The switching means comprise a fundamental-carrier-frequency setting device 6, a factor-data table 7, a factor selector circuit 8, and a multiplier 9.

The fundamental-carrier-frequency setting device 6 has a fundamental carrier frequency set as a fixed value to establish a reference value of the carrier frequencies generated by the triangular-wave generating circuit 4. The fundamental carrier frequency is determined to be relatively low, wherein the semiconductor switches SU-SZ in the main circuit 1 need no high-frequency elements and wherein an electromagnetic sound produced by the electric motor is in the audio-frequency range.

The factor-data table 7 has a plurality of factor data used when obtaining the product of the fundamental carrier frequency set by the fundamental-carrier-frequency setting device 6 and a factor, wherein it is assumed that the fundamental carrier frequency is 1.

The factor selector circuit 8 serves to select a factor data from the factor-data table 7, which is provided to the multiplier 9 as a multiplier signal. The factor selector circuit 8 receives a factor selecting signal or a control signal corresponding to operating conditions of the motor and the inverter such as a motor loaded condition (normal/overload) and an inverter cooling-fin condition (normal/overheating).

The multiplier 9 serves to multiply the fundamental carrier frequency set by the fundamental-carrier-frequency setting device 6 by a factor selected by the factor selector circuit 8, which is provided to the triangular-wave generating circuit 4 as a carrier-frequency control signal.

With the structure as described above, the triangular-wave or carrier frequencies are switched in accordance with factors selected by the factor selector circuit 8. By changing this switching of the carrier frequencies at appropriate time intervals in accordance with a motor loaded condition and an inverter cooling-fin condition, a tone of an electromagnetic sound is changed, which has a triangular-wave or carrier frequency as a main component.

It will be understood that the first embodiment does not make an electromagnetic sound less audible by increasing the carrier frequency, but uses the sound as means for warning operators of operating conditions of the motor and the inverter. By way of example, when warning them of inverter anomalies such as overioad and cooling-fin overheating, a tone of an electromagnetic sound is controlled to be offensive or gloomy and sad to operators. During normal operation, it is controlled to be inoffensive or bright and cheerful to them.

A method of controlling a tone of an electromagnetic sound will be described in detail.

### a) Case 1 when warning of an anomaly (change to an offensive tone)

The carrier frequency is determined to produce an electromagnetic sound with single and high-pitched tone in the frequency range of about 2 to 4 kHz, which is often offensive to operators. This single and high-pitched electromagnetic sound is similar to that one produced in connection with the ordinary control circuit. In the first embodiment, it is obtained by selecting a factor 1 in the factor selector circuit 8 only when warning of an anomaly.

### b) Case 2 when warning of an anomaly (change to a gloomy and sad tone)

Using the fundamental carrier frequency as a ground or root note, the factor selector circuit 8 switches carrier frequencies 1, 2, 3 of three notes, such as do, mi flat, and sol, which form a minor chord giving a gloomy and sad impression in a periodic way of frequency 1 → frequency 2 → frequency 3 → frequency 1 ...

The carrier frequencies 1, 2, 3 have values obtained by multiplying the fundamental carrier frequency FC_ SET (Hz) by factors as given in Table 1. The impression of a warning sound varies in accordance with a switching interval of the carrier frequencies 1, 2, 3, so that for obtaining an emphasized minor chord, this switching interval needs to have a value Tc (sec) which allows clear hearing of the three notes, e.g. about 17 msec with about 60 notes (20 periods) per sec.

**Table 1 -**

| Factors for a minor chord | | | |
|---|---|---|---|
| | Frequency 1 | Frequency 2 | Frequency 3 |
| Factors | 2 ^{(0/12)}= 1.0000 | 2 ^{(3/12)} = 1.1892 | 2 ^{(7/12)} = 1.4983 |

### c) Case 1 during normal operation (change to a bright and cheerful tone)

Using the fundamental carrier frequency as a ground or root note, the factor selector circuit 8 switches carrier frequencies 1, 2, 3 of three notes, such as do, mi, and sol, which form a major chord giving a bright and cheerful impression in a periodic way of frequency 1 → frequency 2 → frequency 3 → frequency 1 ...

The carrier frequencies 1, 2, 3 have values obtained by multiplying the fundamental carrier frequency FC_ SET (Hz) by factors as given in Table 2. The impression of an electromagnetic sound varies in accordance with a switching interval of the carrier frequencies 1, 2, 3, so that for obtaining an emphasized major chord, this switching interval needs to have a value Tc (sec) which allows clear hearing of the three notes, e.g. about 17 msec with about 60 notes (20 periods) per sec.

**Table 2 -**

| Factors for a major chord | | | |
|---|---|---|---|
| | Frequency 1 | Frequency 2 | Frequency 3 |
| Factors | 2 ^{(0/12)} = 1.0000 | 2 ^{(4/12)} = 1.2599 | 2^{(7/12)} = 1.4983 |

### d) Case 2 during normal operation (change to an inoffensive tone)

When reducing a switching interval of the carrier frequencies 1, 2, 3, e.g. to about 8 rrisec with about 120 notes (40 periods) per sec, a distinction becomes impossible between a major chord and a minor code, and a tone of an electromagnetic sound is changed to an inoffensive one in either chord.

Thus, except when actively informing operators of some situation, the carrier frequencies 1, 2, 3 are switched every relatively short period of time of 2 to 10 msec, which corresponds to an integral multiple of a control period Ts (sec) of the inverter.

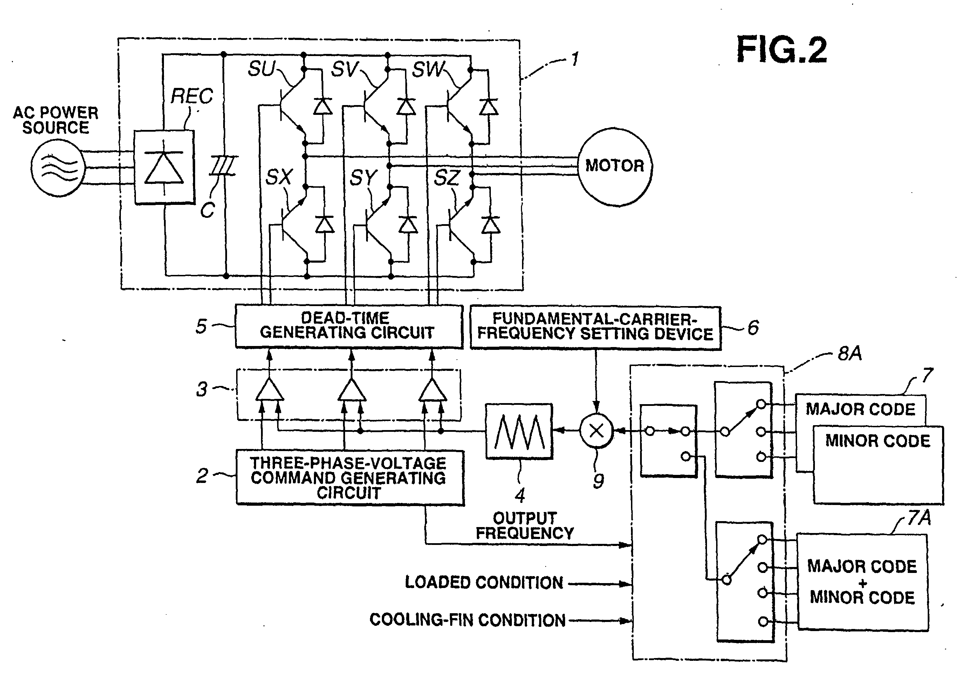

FIG. 2 shows a second embodiment of a PWM inverter which is in accordance with the invention. In the first embodiment, the switching interval Tc of the carrier frequencies 1, 2, 3 is determined to be long for obtaining clear notes and to be short for obtaining an inoffensive tone. However, it has a given period corresponding to an integral multiple of the control period Ts (sec) of the inverter regardless of an output frequency Fo (Hz) thereof.

In the first embodiment, when the inverter output frequency Fo (Hz) approaches a frequency Fn = 1/(3 * Tc * n) (Hz) (n = 6, 3, 1) which is determined in accordance with the switching interval Tc (sec) of the carrier frequencies 1, 2, 3, a beat sound with frequency of 6 * |Fn - Fo| (Hz) is produced. This forms a unfavorable behavior during normal operation and except when actively informing operators of some situation.

Note that, as described above, when the switching interval Tc (sec) of the carrier frequencies 1, 2, 3 is determined to be short for normal operation, a tone of an electromagnetic sound is inoffensive in either chord. In view of this, the second embodiment provides a third setting of periodically switching carrier frequencies 1, 2a, 2b, 3 of four notes using factors as given in Table 3, which are a combination of the factors as given in Tables 1 and 2, so as to be capable of changing the frequency pertinent to occurrence of a beat sound from Fn = 1/(3 * Tc * n) (Hz) to Fn' = 1/(4 * Tc * n) (Hz) (n = 6, 3, 1). This change can automatically be carried out in accordance with the inverter output frequency Fo (Hz).

**Table 3 -**

| Factors for a combined chord of Tables 1 and 2 | | | | |
|---|---|---|---|---|
| | Frequency 1 | Frequency 2a | Frequency 2b | Frequency 3 |
| Factors | 2 ^{(0/12)}=1.0000 | 2^{(3/12)}=1.1892 | 2^{(4/12)}=1.2599 | 2^{(7/12)}=1.4983 |

Referring to FIG. 2, the structure of the second embodiment which allows the above frequency change is substantially similar to that of the first embodiment except that in addition to the factor-data table 7, it includes a factor-data table 7A having a plurality of data on the factors as given in Table 3, which are a combination of the factors as given in Tables 1 and 2. Upon reading of a factor from the factor data tables 7,7A, a factor selector circuit 8A selects one of a mode of switching the three notes and a mode of switching the four notes so as to restrain occurrence of a beat sound resulting from the relationship between the inverter output frequency Fo (Hz) and the switching interval Tc (sec) of the carrier frequencies 1, 2, 3.

## Claims

1. An inverter for generating a pulse-width modulation (PWM) waveform by comparing a sine wave and a triangular wave for driving of an electric motor, the inverter including means for generating a triangular wave, **characterized in that**
the triangular-wave generating means comprise a setting device (6) for setting a fundamental carrier frequency (FC_SET) (Hz) so that an electromagnetic sound produced by the motor is in an audio-frequency range, a factor-data table (7; 7A) including a plurality of data on factors, and a factor selector circuit (8; 8A) for selecting one factor from said factor-data table (7; 7A) periodically and at predetermined time intervals (Tc) (sec) in accordance with operating conditions of the inverter and the motor, wherein said one factor is selected so that the electromagnetic sound produced by the motor is in the audio-frequency range, and wherein said one factor and said fundamental carrier frequency (FC_SET) (Hz) are multiplied together to obtain a carrier frequency (1, 2, 3, 1, 2a, 2b, 3) which is of the triangular wave,
that when giving a warning of an anomaly of the inverter or the motor, the triangular-wave generating means generate a carrier frequency having a single and high-pitched tone or carrier frequencies (1, 2, 3) of three notes switched periodically and at first predetermined time intervals (Tc) (sec) which allow a recognition of a minor chord,
that during normal operation of the inverter and the motor, the triangular-wave generating means generate carrier frequencies (1, 2, 3) of three notes switched periodically and at second predetermined time intervals (Tc) (sec) which allow a recognition of a major chord, or switched periodically and at third predetermined time intervals (Tc) (sec) which disallow a distinction between said minor chord and said major chord, and
that when generating said carrier frequencies (1, 2, 3) switched at said third predetermined time intervals (Tc) (sec) which disallow said distinction between said minor chord and said major chord, the triangular-wave generating means switch periodically carrier frequencies (1, 2a, 2b, 3) of four notes which form said minor and major chords, and select one of a mode for switching said three notes and a mode for switching said four notes in accordance with an output frequency (Fo) (Hz) of the inverter so as to restrain occurrence of a beat sound resulting from the relationship between said output frequency (Fo) (Hz) of the inverter and said predetermined time intervals (Tc) (sec) of said carrier frequencies (1, 2, 3).

## Patentansprüche

1. Wechselrichter zum Erzeugen einer Wellenform zur Pulsweitenmodulation (PWM), indem eine Sinuswelle und eine Dreieckwelle zum Ansteuern eines Elektromotors verglichen werden, wobei der Wechselrichter Mittel zum Erzeugen einer Dreieckwelle umfasst, **dadurch gekennzeichnet, dass**
die Mittel zum Erzeugen einer Dreieckwelle umfassen: eine Einstelleinrichtung (6) zum Einstellen einer Grundträgerfrequenz (FC_SET) (Hz), so dass ein von dem Motor erzeugter elektromagnetischer Ton in einem Audiofrequenzbereich liegt, eine Faktordatentabelle (7; 7A), die eine Vielzahl von Daten über Faktoren umfasst, und einen Faktorauswahlschaltkreis (8; 8A) zum Auswählen eines Faktors aus der Faktordatentabelle (7; 7A) periodisch und in vorbestimmten Zeitintervallen (Tc) (sec) gemäß Betriebsbedingungen des Wechselrichters und des Motors, wobei der eine Faktor derart ausgewählt wird, dass der von dem Motor erzeugte elektromagnetische Ton im Audiofrequenzbereich liegt, und wobei der eine Faktor und die Grundträgerfrequenz (FC_SET) (Hz) miteinander multipliziert werden, um eine Trägerfrequenz (1, 2, 3, 1, 2a, 2b, 3) zu erhalten, die die Dreieckwelle aufweist,
dass bei Ausgabe einer Warnung vor einer Abnormalität des Wechselrichters oder des Motors die Mittel zum Erzeugen einer Dreieckwelle eine Trägerfrequenz mit einem einzelnen und hoch gestimmten Ton oder Trägerfrequenzen (1, 2, 3) mit drei Noten erzeugen, die periodisch und in ersten vorbestimmten Zeitintervallen (Tc) (sec) geschaltet werden, was eine Erkennung eines Mollakkords erlaubt, dass während des normalen Betriebes des Wechselrichters und des Motors die Mittel zum Erzeugen einer Dreieckwelle Trägerfrequenzen (1, 2, 3) mit drei Noten erzeugen, die periodisch und in zweiten vorbestimmten Zeitintervallen (Tc) (sec) geschaltet werden, was eine Erkennung eines Durakkords erlaubt, oder periodisch und in dritten vorbestimmten Zeitintervallen (Tc) (sec) geschaltet werden, was keine Unterscheidung zwischen dem Mollakkord und dem Durakkord erlaubt, und
dass bei Erzeugung von Trägerfrequenzen (1, 2, 3), die in den dritten vorbestimmten Zeitintervallen (Tc) (sec) geschaltet werden, was keine Unterscheidung zwischen dem Mollakkord und dem Durakkord erlaubt, die Mittel zum Erzeugen einer Dreieckwelle periodisch Trägerfrequenzen (1, 2a, 2b, 3) mit vier Noten schalten, die die Mollund Durakkorde bilden, und gemäß einer Ausgangsfrequenz (Fo) (Hz) des Inverters entweder einen Modus zum Schalten der drei Noten oder einen Modus zum Schalten der vier Noten auswählen, um das Auftreten eines Schwebungstons zu verhindern, der aus der Beziehung zwischen der Ausgangsfrequenz (Fo) (Hz) des Wechselrichters und den vorbestimmten Zeitintervallen (Tc) (sec) der Trägerfrequenzen (1, 2, 3) resultiert.

## Revendications

1. Inverseur pour engendrer une forme d'onde avec modulation en largeur d'impulsion par comparaison d'une onde sinusoïdale et d'une onde triangulaire pour piloter un moteur électrique, l'inverseur incluant des moyens pour engendrer une onde triangulaire, **caractérisé en ce que** :
les moyens de génération d'onde triangulaire comprennent un dispositif de fixation (6) pour fixer une fréquence porteuse fondamentale (FC_SET) (Hz) de sorte qu'un son électromagnétique produit par le moteur tombe dans une plage de fréquences audio, une table de données de facteurs (7 ; 7A) incluant une pluralité de données sur les facteurs, et un circuit sélecteur de facteur (8 ; 8A) pour choisir un facteur depuis ladite table de données de facteurs (7 ; 7A) périodiquement et à des intervalles temporels prédéterminés (Tc) (secondes) selon les conditions de fonctionnement de l'inverseur et du moteur, ledit facteur étant choisi de telle manière que le son électromagnétique produit par le moteur tombe dans la plage des fréquences audio, et ledit facteur et ladite fréquence porteuse fondamentale (FC_SET) (Hz) sont multipliés l'un avec l'autre pour obtenir une fréquence porteuse (1, 2, 3, 1, 2a, 2b, 3) qui est celle de l'onde triangulaire,
lorsqu'ils donnent un avertissement d'une anomalie de l'inverseur ou du moteur, les moyens de génération d'onde triangulaire engendrent une fréquence porteuse ayant un ton unique à fréquence aiguë, ou des fréquences porteuses (1, 2, 3) de trois notes jouées périodiquement et à des premiers intervalles temporels prédéterminés (Tc) (secondes) qui permettent de reconnaître un accord mineur,
pendant le fonctionnement normal de l'inverseur et du moteur, les moyens de génération d'onde triangulaire engendrent des fréquences porteuses (1, 2, 3) de trois notes jouées périodiquement et à des seconds intervalles temporels prédéterminés (Tc) (secondes) qui permettent de reconnaître un accord majeur, ou jouées périodiquement et à des troisièmes intervalles temporels prédéterminés (Tc) (secondes) qui ne permettent pas une distinction entre ledit accord mineur et ledit accord majeur, et
lorsqu'ils engendrent lesdites fréquences porteuses (1, 2, 3) jouées auxdits troisièmes intervalles temporels prédéterminés (Tc) (secondes) qui ne permettent pas ladite distinction entre ledit accord mineur et ledit accord majeur, les moyens de génération d'onde triangulaire jouent périodiquement des fréquences porteuses (1, 2a, 2b, 3) de quatre notes qui forment ledit accord mineur et ledit accord majeur, et choisissent un mode, parmi un mode pour jouer lesdites trois notes et un mode pour jouer lesdites quatre notes, selon une fréquence de sortie (Fo) (Hz) de l'inverseur, de manière à restreindre l'apparition d'un son de battement résultant de la relation entre ladite fréquence de sortie (Fo) (Hz) de l'inverseur et lesdits intervalles temporels prédéterminés (Tc) (secondes) desdites fréquences porteuses (1, 2, 3).
